# EUROPEAN PATENT SPECIFICATION

(11) **EP 3 428 822 B1**
(45) Date of publication and mention of the grant of the patent: **13.09.2023**
(21) Application number: 18305937.7
(22) Date of filing: 11.07.2018
(51) Int. Cl.: G06F 21/32, G06F 21/34

(54) **CONTROL METHOD OF AN INDIVIDUAL OR GROUP OF INDIVIDUALS TO A CONTROL POINT MANAGED BY A CONTROL AUTHORITY**
VERFAHREN ZUR STEUERUNG EINER EINZELPERSON ODER EINER GRUPPE VON EINZELPERSONEN ZU EINER VON EINER KONTROLLBEHÖRDE VERWALTETEN KONTROLLSTELLE
PROCÉDÉ DE COMMANDE D'UN INDIVIDU OU D'UN GROUPE D'INDIVIDUS À UN POINT DE COMMANDE GÉRÉ PAR UNE AUTORITÉ DE COMMANDE

(30) Priority: 11.07.2017 FR 1756558
(43) Date of publication of application: 16.01.2019
(73) Proprietor: Idemia Identity & Security France, 92400 Courbevoie (FR)
(72) Inventor: CHASTEL, Pierre, 92130 ISSY-LES-MOULINEAUX (FR); BIARNES, Frédérique, 92130 ISSY LES MOULINEAUX (FR)
(74) Representative: Idemia

(56) References cited:
- EP-A1- 3 154 003
- US-A1- 2004 059 953
- US-A1- 2008 080 748
- US-A1- 2012 268 241

## Description

### BACKGROUND

### 1, FIELD

Exemplary embodiments relate to a verification method of right of access of an individual or a group of individuals to a zone delimited by a control point managed by a control authority, and more particularly, to verification of the right of an individual or group of individuals to pass through a control point, such as a police roadblock, a frontier, a boarding area, etc.

### 2. DESCRIPTION OF RELATED ART

The control of individuals at a control point managed by a control authority (for example: police roadblock (road, railway, sea route) or checkpoint) currently requires that a control agent (for example a police officer) acquires biometrics (face, iris, fingerprint, palm print, ear, ....) of individuals for the purpose of matching these freshly acquired biometrics with biometrics of the same nature of n individuals previously acquired, recorded and stored in a database accessible by the control authority.

The related art control point management methods pose increased safety risks to the control agents, and are time-consuming and thus slow down traffic through the control point. US2004/059953 anticipates a user biometric identification system.

### SUMMARY

According to an aspect of one or more exemplary embodiments, there is provided a control method including, before the individual or group of individuals presents at the control point, initializing a control protocol of each individual, including receiving and storing at least one biometric datum and/or at least one identification metadata of the terminal and/or the vehicle, retrieving freshly acquired biometric datum from each individual; extracting metadata associated with each datum; verifying the coherence of the extracted metadata; and comparing each freshly acquired biometric datum retrieved with a set of biometric reference data stored in a control server, so as to ascertain whether a controlled individual belongs to a list of individuals of interest; and when the individual or group of individuals presents at the control point: finalizing the control protocol of each individual and if either authentication and/or verification fails, subjecting the individual or the group of individuals to more intense scrutiny, and if both authentication and verification pass, authorizing the individual or the group of individuals to cross the control point.. According to other aspects of one or more exemplary embodiments, there is also provided a terminal, a computer readable storage medium and a system consistent with the control method. The invention is defined in the appended claims.

### BRIEF DESCRIPTION OF THE FIGURES

Other characteristics, aims and advantages will emerge from the following description which is purely illustrative and non-limiting, and which must be considered with respect to the appended drawings, in which:
- figure 1 schematically illustrates a control system according to an embodiment;
- figures 2 and 3 schematically illustrate steps of a control method according to exemplary embodiments.

### DETAILED DESCRIPTION

Individuals may be controlled at a control point for a number of different reasons. For example, cars at a border crossing, ships arriving at a port, planes landing a foreign territory, and/or buses at a border crossing. For example, this may be the case especially during
- a search for suspects during a police or military investigation;
- a search for very important person (VIP) passengers or passengers previously enrolled at an airline checkpoint (initials), or of a cruise line, etc.

Acquisition of the freshly acquired biometrics requires in particular that once a vehicle has arrived at the roadblock point or control point:
- the vehicle comprising an individual or group of individuals stops at the control point;
- a control agent proceeds to acquire the biometrics of each individual of the vehicle:
   ∘ either by asking each individual of the group of individuals to step out of the vehicle,
   ∘ or by proceeding *in situ* with acquiring the biometrics of each individual of the group, the acquiring being performed:
      ▪ inside their vehicle (the control agent entering the vehicle if it is a bus, train, cargo ship, cruise liner), etc. or
      ▪ from the exterior, e.g., the control agent placing his arm and his acquisition device inside the vehicle), and
- the control agent carries out identification/authentication of each individual on the basis of the freshly acquired biometrics.

It is noted that all these steps are conducted in the region of the control point.

Thus, there are several disadvantages to this process. First, apart from the fact that these steps obviously pose safety problems for the control agent, the steps are time-consuming and slow down traffic flow resulting in unwanted bottlenecks.

Also, the above-described acquisition of a biometric datum of the individual or group of individual to be controlled according to the related art requires that the individual or group of individual moves to a specific location (control point) and stop at the specific location, so that a biometric data collection device may be used to acquire the biometric datum. In addition to requiring a specific device, often operated by the control agent himself, the flow of individual is being stopped, thus, generating a waste of time for all individual crossing the control point.
The exemplary embodiments propose eliminating at least one of the above disadvantages.

Indeed, it is an aspect to provide to the control authority a method to make smoother traffic flow and/or ensure discretion of roadblocks disrupting traffic flow as little as possible and slowing down individual or group of individuals within a vehicle as little as possible. Indeed, the control agent tries rather to make for smoother traffic flow and/or ensure discretion of roadblocks disrupting traffic flow as little as possible and slowing down vehicles as little as possible.

To this end, it is an aspect to provide a control method of an individual or group of individuals at a control point managed by a control authority, the method comprising the following steps conducted by a processor of a control terminal of a control authority:
- before the individual or group of individuals presents at the control point,
   ∘ initialisation of a control protocol of each individual, said initialisation comprising:
      ▪ retrieval, by the control authority, by means of a control terminal of at least one individual biometric datum, the biometric datum having been previously acquired by means of a user terminal belonging to an individual to be controlled;
      ▪ extraction of metadata associated with each biometric datum; the metadata may include, for example, temporal metadata, location metadata, a terminal ID, and/or a vehicle ID in which the individual is riding.
      ▪ "anti-fraud" verification consisting of verifying the coherence of extracted metadata so as to evaluate whether a biometric datum is acceptable;
      ▪ comparison of each biometric datum acquired with a set of biometric reference data stored in a control server, said reference data corresponding to a list of individuals of interest so as to ascertain whether a controlled individual belongs to the list of individuals of interest;
- when the individual or group of individuals presents at the control point
   ∘ finalisation (200) of the control protocol of each individual, including verifying the integrity of the biometric data and/or the associated metadata.

The acquisition, prior to arrival at the control point, of the biometric datum by means of a terminal belonging to an individual to be controlled allows a greater flexibility in terms of acquisition conditions. Indeed, the individual does not have to move in a given place, during a given time slot, and the acquisition does not require a specific device, other than that which the individual already possesses.

Exemplary embodiments are advantageously completed by the following characteristics, taken singly or in any of their technically possible combinations:
- the metadata comprising temporal timestamping information of obtaining the biometric data; and/or place information of obtaining the biometric data; and/or identification information of the terminal/terminals having obtained the biometric data.
- initialisation comprises an "anti-fraud" verification step of each biometric datum acquired, including verifying that all the biometric data come from different individuals; For example, such verification may be used in a case where a group of individuals are within a same vehicle, and each of the individuals in the vehicle provide biometric datum. By way of example, if there are five individuals in the car, there should be five biometric datum collected and not four. The "anti-fraud" verification step verifies that a number of biometric datum acquired matches the number that should be acquired based on, for example, a number of persons present in a vehicle.
- the "anti-fraud" verification comprises the verification of the coherence of metadata with temporal and/or place and/or identification of a user terminal of the individual and/or identification of a vehicle containing the individual or group of individuals data;
- the individuals to be controlled are in the same vehicle;
- the initialisation step of the control protocol is conducted at a predetermined time and/or at a predetermined place before the individual or group of individuals presents at the control point; Here, the biometric data are freshly acquired. Thus, in the event that an individual has prior biometric data stored in his or her user terminal, this prior biometric data would not be used. Rather, the biometric data would be acquired (or, in the event biometric data is previously stored, re-acquired) just before the control point is reached by the vehicle, and be acquired specifically for the purposes of processing at the control point. That the biometric data is collected freshly, i.e., just before the control point is reached, may be determined based on temporal and/or location metadata acquired with the biometric data. If the temporal and/or location metadata is does not indicate fresh acquisition of the biometric data, the biometric data acquired is considered not to be coherent. Here, metadata is considered "coherent" when the metadata match a predetermined metadata set. For instance, the predetermined metadata set may be, but is not limited to: in case of a roadblock, the predetermined temporal metadata set may include any value of time MTi typically comprise between 3 min before MTc : the time the individual or group of individual reach the control point and MTc : MTc - 3 min < MTi < MTc. This could be any predetermined value: -3 min or -1 min, - 10 min depending of the circumstances. Predetermined place/local metadata set may consist of any value of distance MLoc i typically comprise between 500 m before MLoc c : the place of the control point and MLoc c : MLoc c - 500 m < MLoc i < MLoc c. This could be any predetermined value: -500 m or -50 m, - 1 km depending of the circumstance. Predetermined identifiant metadata of the terminal set may include identifiant metadata of the terminal known to belong to or to be used by the individual (the individual having declared his identifiant and/or having already cross the border with this terminal and the control authority has previously stored this information. Predetermined identifiant metadata of the vehicle set may include identifiant metadata of the vehicle known to belong to or to be used by the individual (the individual having declared his identifiant and/or having already cross the border with this vehicle and the control authority has previously stored this information
- the terminal securely acquires each biometric datum; biometric datum acquisition here, typically means that the individual (from a group or not) takes a selfy or an image of any of his own biometric datum (fingerprint, iris...), there is no need of including communication means, as the biometric datum acquisition includes taking a picture of a face, an iris, etc...
- the verification of the integrity of data includes verifying that the number of acquired biometric data corresponds to the number of individuals presenting at the control point; As with the anti-fraud step above, such verification may be used in a case where a group of individuals are within a same vehicle, and each of the individuals in the vehicle provide biometric datum. By way of example, if there are five individuals in the car, there should be five biometric datum collected and not four. The "anti-fraud" verification step verifies that a number of biometric datum acquired matches the number that should be acquired based on , for example, a number of persons present in a vehicle.
- the verification of the integrity of data comprises the verification of the coherence of at least two among the three following types of metadata:
   ∘ temporal timestamping metadata of obtaining the biometric data, and/or place metadata of obtaining the biometric data;
   ∘ identification metadata of the terminal/terminals having obtained the biometric data;
   ∘ identification metadata of the vehicle containing the individuals to be controlled.

Exemplary embodiments also relate to a control terminal of a control authority comprising a processor configured to execute a method according to the exemplary embodiments and a computer program product comprising code instructions for executing the method of the exemplary embodiments when it is run by a computer of a control server.

Finally, the exemplary embodiments also relate to a control system comprising at least a user terminal, a control server and a control terminal.

The exemplary embodiments have multiple advantages.

The exemplary embodiments reduce the time for passing through a control point by an individual or group of individuals, optionally in a vehicle, by displacing control steps upstream of passing through this control point. Here, "upstream" denotes before the control point. Typically, this will be within a time and/or a predetermined distance from the arrival of the individual(s) at the control point.

In this way, the exemplary embodiments make for smoother checking of individuals at a control point.

An individual or a group of individuals to be checked at a control point by a control authority is assumed.

The control authority is for example a police officer, a customs authority, or a transport company. In the case of a transport company, when an individual tries to board an aircraft or a cruise liner this can be an airline or cruise line. In the case the transport company is a commercial cargo transport company, when an individual or group of individuals, such as crew members, board the ship, etc.

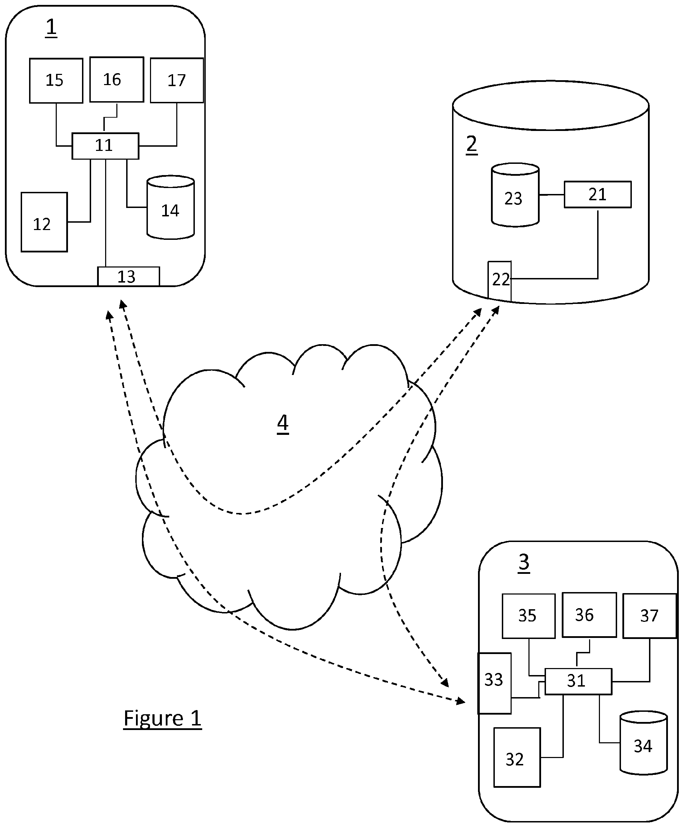

In relation to **figure 1**, a system control comprises a user terminal 1, a control server 2 and a control terminal 3.

The user terminal 1, the control server 2 and the control terminal 3 are connected together by means of a communications network 4, for example the Internet network.

The user terminal 1 advantageously belongs to an individual to be controlled. Such a user terminal 1 is preferably an electronic device personal to an individual and is for example a mobile communications terminal, smartphone or digital tablet.

The user terminal 1 comprises a processor 11 configured to execute code instructions, for example, of a software application downloadable from a server for running a control method to be described hereinbelow.

The user terminal 1 comprises a biometric acquisition module 12 of a biometric datum on a biometric trait of an individual. The biometric trait may be for example the face, the iris, a fingerprint, a palm print, an ear, etc. For example, the user terminal 1 may include a camera, a fingerprint reader, an iris reader, a palm print reader, a microphone, a body part scanner, and the like, which, in conjunction with the biometric acquisition module 12 may be operated such that an individual as a user of of the user terminal 1 may input a face scan, an iris scan, a fingerprint, a palm print, an ear scan, etc. as the biometric datum of the individual.

The biometric acquisition module 12 comprises an image sensor (not shown) an image-processing module (not shown) configured to extract a biometric datum from an image of a biometric trait, produced by the camera, fingerprint reader, iris reader, palm print reader, body part scanner, or the like as discussed above.. Extraction of the biometric datum is advantageously performed by processing of the image of the biometric trait which depends on the nature of the biometric trait.

The user terminal 1 also comprises a communications interface 13 configured to communicate with the control server 2 by means of the communications network 4. The communications interface 13 may be a WiFi interface, a bluetooth interface, an RF communication interface, a wireless communication interface, or the like.

Also, the user terminal 1 comprises a memory 14 configured to store one or more acquired biometric data or else a software application.

The user terminal 1 comprises a display screen 15 configured to display information and especially to control acquisition of the biometrics.

In some embodiments, the user terminal 1 may comprise a chip reader 16 of an identity document, typically a reader using near field communication technology (in English, *"Near Field Communication",* (NFC)) or any other wireless communication.

The user terminal 1 comprises an interface 17 for inputting information, such as a keypad, a touch screen or even a micro.

The control server 2 comprises a processor 21 configured to execute the control method to be described hereinbelow. The control server 2 also comprises a communications interface 22 for communicating with the user terminal 1 and/or the control terminal 3. As such, the communications interface 22 may be a WiFi interface, a bluetooth interface, an RF communication interface, a wireless communication interface, or the like, similar to the communications interface 13 of the user terminal 1.

Also, the control server 2 comprises a memory 23 configured to store a database of biometric reference data which correspond to individuals of interest. Individuals of interest can for example be wanted suspects, VIPs for an airline or airport company or generally an individual to be identified. The memory 23 of the control server can also store biometrics acquired by means of one or more user terminals 1 and will be accessible by the control terminal 3.

The control terminal 3 may be operated advantageously by the control authority managing the control point. The control terminal 3 undertakes the checking of individuals according to a method to be described hereinbelow.

In some embodiments, the control terminal 3 comprises elements identical to the user terminal 1 described previously:
- a processor 31 configured to execute code instructions for example of a software application downloadable from a server for executing the control method;
- an acquisition module 32 of a biometric datum on a biometric trait of an individual;
- a communications interface 33 configured to communicate with the control server 3 by means of the communications network 4;
- a memory 34 configured to store one or more acquired biometric data or else a software application;
- a display screen 35 configured to display information and for especially controlling the acquisition of the biometrics;
- a chip reader 36 of an identity document, typically a reader using the NFC;
- an interface 37 for information input such as a keypad, a touch screen or even a micro.

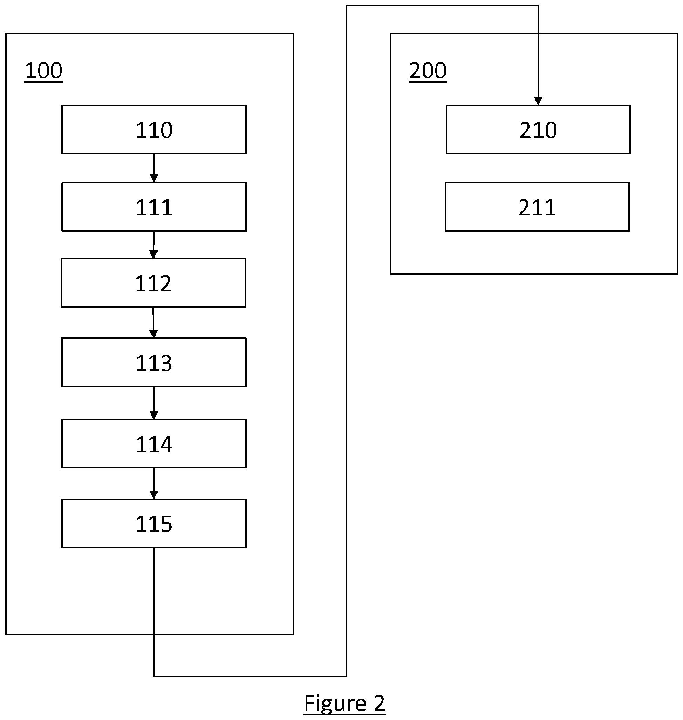

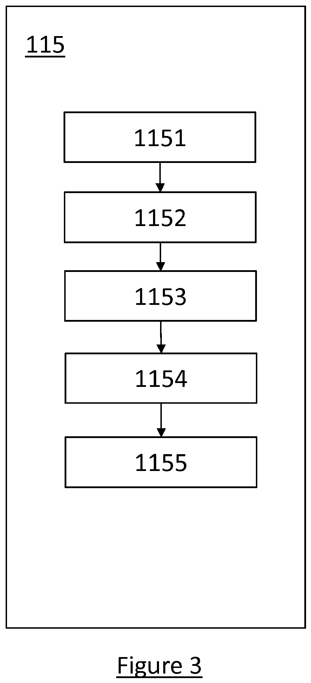

In relation to **figures 2** and **3** these describe a control method of an individual or group of individuals at a control point managed by a control authority.

The method comprises a first series of steps 100 conducted before the individual or group of individuals presents at the control point.

These can be steps conducted at a time previously determined prior to the arrival of the individual or group of individuals at the control point. This can be a few days in the case where the individual or group of individuals is cruising (with no possibility of leaving the vehicle which is driving them to the control point) or a few minutes for some police roadblocks. Also, this first series of steps is conducted in a given localised perimeter near the control point. For instance, there may be a sign before the control point instructing individuals to collect biometric data, or a sms automatically sent to any vehicles or individual(s) approaching the point of control, a radio broadcast on dedicated motorway broadcast, or a control agent placed upstream (in time and/or distance) from the control point to inform the individual or group of individuals to collect biometric data, etc.

This first series of steps 100 comprises an acquisition step 110 of a biometric datum of each individual approaching the control point. To this end, each individual can utilise his user terminal 1 or else that of another individual. For example, during this step 110 each individual takes a selfie (auto-acquisition) or has his photo taken.

In some embodiments, simultaneously with acquisition 110 of each biometric datum (i.e., a datum from each individual in the group of individuals), each acquired biometric datum is annotated (step 111) by metadata. These metadata comprise:
- temporal timestamping data; and/or
- configurable places (GPS coordinates); and/or
- identification data of the terminal/terminals used for acquisition; and/or
- identification data of the vehicle containing the individual or group of individuals.

Such metadata are called "confidence" in that they are generated and stored in a trusted environment (type TEE (in English, "*Trusted Execution Environment*") or SE (in English, *"Secure Element"*))*.*

Also, these metadata can be verified by putting known countermeasures in place (for this see document "GPS Vulnerability to Spoofing Threats and a Review of Antispoofing Techniques", Ali Jafarnia-Jahromi, Ali Broumandan, John Nielsen, and Gerard Lachapelle, Position Location and Navigation (PLAN) Group, Schulich School of Engineering, University of Calgary, 2500 University Drive, NW, Calgary, AB, Canada T2N 1N4, In International Journal of Navigation and Observation, Volume 2012 (2012), Article ID 127072, 16 pages).

In a step 112 the freshly acquired data (the optionally annotated biometric data of metadata) can be stored in the user terminal having acquired the data.

After storage or directly after their acquisition, the data are transmitted 113 by at least one individual of the group to an address of the control authority so the data can be stored, in a step 114,
- in the control server 2; and/or
- in the control terminal 3 of the control authority.

The address can be known to the public at large or else displayed temporarily on arrival at the control point or near the control point. Likewise the address can be communicated automatically to all user terminals entering a delimited zone on approach to the control point. For instance, there may be a sign before the control point instructing individuals to collect biometric data, or a sms automatically sent to any vehicles or individual(s) approaching the point of control, a radio broadcast on dedicated motorway broadcast, or a control agent placed upstream (in time and/or distance) from the control point to inform the individual or group of individuals to collect biometric data, etc.

Such transmission is performed securely according to VPN type protocols.

Before the individual or group of individuals presents at the control point, the control authority receives and stores at least one biometric datum from the individual or group of individuals, and/or at least one identification metadata of the terminal and/or the vehicle. This step ensures that the control authority is in possession of the biometric reference data which may be associated with one of the terminal and/or vehicle identifiers.

Before the individual or group of individuals presents at the control point, via the control terminal 3 the control authority conducts an initialisation step 115 of a control protocol of each individual.

The initialisation 115 comprises the following sub-steps.

By means of the control terminal 3, the control authority retrieves (step 1151) the biometric data of each individual (which have been previously acquired), the data having been transmitted directly by the user terminal or have transited via the control server 2. Here too, the data arrive at the control terminal securely. The control terminal may know data is for individuals in one car and not another car based on the metadata, and specifically, whether the metadata is coherent as discussed above. That is, if there is a long queue at the border, the control authority may distinguish data of individuals in a current car from data received from individuals in all the cars in the queue by using the metadata received with each datum.

If the retrieved data include metadata, the terminal 3 extracts them (step 1152). These metadata improve the trust of data acquired by the control terminal 2.

The control terminal 3 performs verification (step 1153) called "anti-fraud" of the biometric data. This verification includes verifying that all the biometric data do come from different individuals. For example, a regular biometric check may be performed by matching freshly acquired biometric to known biometric of the individual - (for instance : comparison of each biometric datum acquired with a set of biometric reference data stored in a control server, said reference data corresponding to a list of individuals of interest so as to ascertain whether a controlled individual belongs to the list of individuals of interest)

This verification also includes verifying that one of the individuals has not twice acquired biometrics in place of another individual of the group for example. This refer to the same optional step being relevant for the case where a group of individual are within the same vehicle and they provide all there biometric datum : if there are 5 individuals in the vehicle, there should be 5 biometric datum and not 4, and the 5 biometric datum should all be different - making a quick check automatic to be sure that none of the 5 individual has acquired his biometric datum twice and all 5 individual has acquired his biometric datum

In some embodiments, this verification also includes verifying the coherence of metadata:
- temporal timestamping data
   o if the time is under a previously determined time the corresponding biometric datum is considered acceptable (this is not a biometric datum of another individual acquired previously which would be resubmitted upstream of the control point), based on its metadata, and the coherency of the metadata as discussed above. Here, it is important not to confound authentication of his biometric datum ( i.e. matching of freshly acquired biometric datum with reference biometric datum (for instance : comparison of each biometric datum acquired with a set of biometric reference data stored in a control server, said reference data corresponding to a list of individuals of interest so as to ascertain whether a controlled individual belongs to the list of individuals of interest) on one hand, with the check of the integrity of the freshly acquired biometric datum by checking for coherent metadata on the second hand. That is, the authentication of the biometric datum is different than the integrity check of the datum.
- configurable places (GPS coordinats)
   ∘ if the time and GPS data correspond to predetermined data, here too the corresponding biometric datum is considered acceptable,
- identifier of the terminal/terminals used for acquisition and/or
   ∘ terminals corresponding to terminals called trusted whereof their user are trusted,
- identifier of the vehicle containing the individual or group of individuals.
   ∘ the vehicle is one expected where it is for example a cruise ship expected to see arrive in the region of the control point.

This verification of coherence therefore evaluates a rate of acceptability of biometric data acquired. As a function of this rate of acceptability, when the individual or group of individuals presents at the control point the identity or not of one or more individuals can be identified.

Next, a comparison (step 1154) of biometric data with biometric reference data stored in the control server 2 is conducted.

This comparison includes, for example, calculating a distance between the biometric datum coming from an individual and each biometric reference datum, for example by calculation of a scalar product between the biometric data and comparing each distance to a predetermined threshold. In the event where a distance is under the threshold, a match is detected between the biometric datum of the individual and one of the reference data. This information can suffice for the control authority to make a decision (step 1155 to follow) at the control point (the individual may or may not be authorised to pass through the control point) when the group of individuals presents at the control point.

As a function of "anti-fraud" verification and comparison, even before the individual or group of individuals arrives at the control point, the control authority can make (step 1155) a first decision which is to:
- deepen the control in the region of the control point of one or more individuals can in this case be controlled; or else
- grant passage to the group of individuals.

When the individual or group of individuals arrives at the control point and stops, the control method comprises finalisation 200 of the control protocol.

In particular, a verification step 210 of the integrity of the biometric data retrieved by the control authority is conducted.

This verification of the integrity of data may include one or more of the following verifications singly or in combination:
- in the case of a group of individuals, it is verified that the number of data does correspond to the number of individuals of the group;
- verification of conformity of metadata associated with each biometric datum acquired according to one or more temporal or location criteria fixed in advance is carried out. In other words, the coherence of the metadata is checked, as discussed above.

The verification 210 of the integrity of data can comprise verification of the coherence of at least:
- temporal timestamping metadata of obtaining the biometric data, and/or place of obtaining the biometric data; and
- identification metadata of the terminal/terminals having obtained the biometric data, or of the vehicle containing the individuals to be controlled.

Verifying the coherence of two types of metadata improves the reliability of the verification 210 of the integrity of the biometric data.

The verification 210 of the integrity of data can comprise the verification of the coherence of at least two among the three following types of metadata:
- temporal timestamping metadata of obtaining the biometric data, and/or place metadata of obtaining the biometric data;
- identification metadata of the terminal/terminals having obtained the biometric data;
- identification metadata of the vehicle containing the individuals to be controlled.

Verifying the coherence of two types of metadata among the three types presented above allows to improve the reliability of the verification 210 of the integrity of biometric data.

Then, in a step 211, the control authority makes a final decision given the preceding verification step and the first decision. For example, if an individual fails verification, the individual is subjected to more intense scrutiny. If the individual passes verification, the individual is authorized to cross the control point unless other circumstances occur.

The foregoing description is illustrative of exemplary embodiments and is not to be construed as limiting thereof. Although a few exemplary embodiments have been described, those skilled in the art will readily appreciate that many modifications are possible in the exemplary embodiments without materially departing from the novel teachings and advantages described herein. Accordingly, all such modifications are intended to be included within the scope of the present application as defined in the claims. Therefore, it is to be understood that the foregoing is illustrative of various exemplary embodiments and is not to be construed as limited to the specific exemplary embodiments disclosed, and that modifications to the disclosed exemplary embodiments, as well as other exemplary embodiments, are intended to be included within the scope of the appended claims.

## Claims

1. A control method of an individual or group of individuals at a control point managed by a control authority, the method comprising the following steps conducted by a processor of a control terminal of a control authority:
before the individual or group of individuals presents at the control point,
receiving and storing, by the control terminal of the control authority, at least one biometric reference datum from the individual or group of individuals, and at least one first identification information of a user terminal belonging to an individual to be controlled and/or of a vehicle in which the individual or group of individuals are riding;
initializing (115) a control protocol of each individual, said initialization comprising:
retrieving (1151), by the control terminal (3), at least one individual freshly acquired biometric datum, the freshly acquired biometric datum having been freshly acquired by means of a user terminal (1) belonging to the individual to be controlled;
extracting (1152) metadata associated with each freshly acquired biometric datum, wherein the extracted associated metadata comprise:
- identification information of the user terminal belonging to the individual to be controlled and having obtained the freshly acquired biometric data, and/or
- identification information of the vehicle in which the individual or group of individuals are riding;
performing anti-fraud verification (1153) including verifying the coherence of the extracted associated metadata so as to evaluate whether the freshly acquired biometric datum is acceptable, wherein the anti-fraud verification (1153) comprises the verification (11532) of the coherence of the extracted associated metadata with the first identification information of the user terminal belonging to the individual to be controlled and/or of the vehicle in which the individual or group of individuals are riding;
the anti-fraud verification further comprising comparing (1154) each freshly acquired biometric datum retrieved with a set of biometric reference data stored in a control server (2), said biometric reference data corresponding to a list of individuals of interest so as to ascertain whether a controlled individual belongs to the list of individuals of interest;
as a function of the "anti-fraud" verification and comparison, making (1155) a first decision which is to:
- deepen the control in a region of the control point of the individual or group of individuals; or else
- grant passage to the individual or group of individuals; and
when the individual or group of individuals presents at the control point:
finalizing (200) the control protocol of each individual, comprising verifying (210) the integrity of the freshly acquired biometric data and/or coherence of the extracted associated metadata, in at least equal manner as disclosed in the anti-fraud verification; and
if either authentication and/or verification of the extracted associated metadata of an individual or a group of individual fails, subjecting the individual or the group of individuals to more intense scrutiny, and
if both authentication and verification of the extracted associated metadata of an individual or a group of individuals pass, authorizing the individual or the group of individuals to cross the control point.

2. The control method according to claim 1, wherein the initialisation (115) comprises an anti-fraud verification step (1153) of each freshly acquired biometric datum, comprising verifying (11531) that all the freshly acquired biometric data come from different individuals.

3. The control method according to claim 1, wherein the individuals to be controlled are in the same vehicle.

4. The control method according to claim 1, wherein the initialisation step of the control protocol is conducted at a predetermined time and/or at a predetermined place before the individual or group of individuals presents at the control point.

5. The control method according to claim 1, wherein the user terminal securely acquires each freshly acquired biometric datum

6. The control method according to claim 1, wherein the verification (210) of the integrity of data comprises verifying that the number of freshly acquired biometric data corresponds to the number of individuals presenting at the control point.

7. The control method according to claim 1, wherein the verification (210) of the integrity of data comprises the verification of the coherence of at least two among the three following types of metadata:
- temporal timestamping metadata of obtaining the freshly acquired biometric data, and/or place metadata of obtaining the freshly acquired biometric data;
- identification metadata of the user terminal having obtained the freshly acquired biometric data;
- identification metadata of the vehicle containing the individuals to be controlled.

8. A control terminal (3) of a control authority comprising a processor configured to execute a method according to claim 1.

9. A computer readable storage medium storing computer program code which, when executed by at least one processor, performs:
before the individual or group of individuals presents at the control point:
receiving and storing, by a control terminal of the control authority, at least one biometric reference datum from the individual or group of individuals, and at least one first identification information of a user terminal belonging to an individual to be controlled and/or a vehicle in which the individual or group of individuals are riding;
initializing a control protocol of each individual, said initialization comprising:
retrieving, by the control terminal (3), at least one individual freshly acquired biometric datum, the freshly acquired biometric datum having been freshly acquired by means of a user terminal (1) belonging to the individual to be controlled;
extracting metadata associated with each freshly acquired biometric datum, wherein the extracted associated metadata comprise:
- identification information of the user terminal belonging to the individual to be controlled and having obtained the freshly acquired biometric data, and/or
- identification information of the vehicle in which the individual or group of individuals are riding;
performing anti-fraud verification including verifying the coherence of the extracted associated metadata so as to evaluate whether the freshly acquired biometric datum is acceptable, wherein the anti-fraud verification (1153) comprises the verification (11532) of the coherence of the extracted associated metadata with the first identification information of the user terminal belonging to the individual to be controlled and/or of the vehicle in which the individual or group of individuals are riding;
the anti-fraud verification further comprising comparing each freshly acquired biometric datum retrieved with a set of biometric reference data stored in a control server (2), said biometric reference data corresponding to a list of individuals of interest so as to ascertain whether a controlled individual belongs to the list of individuals of interest;
as a function of the "anti-fraud" verification and comparison, making (1155) a first decision which is to:
- deepen the control in a region of the control point of the individual or group of individuals; or else
- grant passage to the individual or group of individuals; and
when the individual or group of individuals presents at the control point:
finalizing the control protocol of each individual, comprising verifying (210) the integrity of the freshly acquired biometric data and/or coherence of the extracted associated metadata, in at least equal manner as disclosed in the anti-fraud verification; and
if either authentication and/or verification of the extracted associated metadata of an individual or a group of individual fails, subjecting the individual or the group of individuals to more intense scrutiny, and
if both authentication and verification of the extracted associated metadata of an individual or a group of individuals pass, authorizing the individual or the group of individuals to cross the control point.

10. A control system comprising:
at least one user terminal (1) belonging to an individual to be controlled;
a control server (2); and
a control terminal of a control authority configured to execute a method comprising:
before the individual or group of individuals presents at the control point:
receiving and storing, by the control terminal, at least one biometric reference datum from the individual or group of individuals, and at least one first identification information of the user terminal belonging to the individual to be controlled and/or of a vehicle in which the individual or group of individuals are riding;
initializing a control protocol of each individual, said initialization comprising:
retrieving, by the control terminal (3), at least one individual freshly acquired biometric datum, the freshly acquired biometric datum having been freshly acquired by means of the user terminal (1) belonging to the individual to be controlled;
extracting metadata associated with each freshly acquired biometric datum, wherein the extracted associated metadata comprise:
- identification information of the user terminal belonging to the individual to be controlled and having obtained the freshly acquired biometric data, and/or
- identification information of the vehicle in which the individual or group of individuals are riding;
performing anti-fraud verification including verifying the coherence of the extracted associated metadata so as to evaluate whether the freshly acquired biometric datum is acceptable, wherein the anti-fraud verification (1153) comprises the verification (11532) of the coherence of the extracted associated metadata with the first identification information of the user terminal belonging to the individual to be controlled and/or of the vehicle in which the individual or group of individuals are riding;
the anti-fraud verification further comprising comparing each freshly acquired biometric datum retrieved with a set of biometric reference data stored in a control server (2), said biometric reference data corresponding to a list of individuals of interest so as to ascertain whether a controlled individual belongs to the list of individuals of interest;
as a function of the "anti-fraud" verification and comparison, making (1155) a first decision which is to:
- deepen the control in a region of the control point of the individual or group of individuals; or else
- grant passage to the individual or group of individuals; and
when the individual or group of individuals presents at the control point:
finalizing the control protocol of each individual, comprising verifying (210) the integrity of the freshly acquired biometric data and/or coherence of the extracted associated metadata, in at least equal
manner as disclosed in the anti-fraud verification; and
if either authentication and/or verification of the extracted associated metadata of an individual or a group of individual fails, subjecting the individual or the group of individuals to more intense scrutiny, and
if both authentication and verification of the extracted associated metadata of an individual or a group of individuals pass, authorizing the individual or the group of individuals to cross the control point.

## Patentansprüche

1. Kontrollverfahren einer Einzelperson oder einer Gruppe von Einzelpersonen an einem durch eine Kontrollbehörde verwalteten Kontrollpunkt, wobei das Verfahren die folgenden durch einen Prozessor eines Kontrollendgeräts der Kontrollbehörde durchgeführten Schritte umfasst:
bevor die Einzelperson oder die Gruppe von Einzelpersonen an dem Kontrollpunkt vorstellig werden,
Empfangen und Speichern, durch das Kontrollendgerät der Kontrollbehörde, mindestens eines biometrischen Referenzdatenelements von der Einzelperson oder der Gruppe von Einzelpersonen und mindestens einer ersten Identifikationsinformation eines einer zu kontrollierenden Einzelperson gehörenden Benutzerendgeräts und/oder eines Fahrzeugs, in dem die Einzelperson oder die Gruppe von Einzelpersonen fährt;
Initialisieren (115) eines Kontrollprotokolls jeder Einzelperson, wobei die Initialisierung Folgendes umfasst:
Abrufen (1151), durch das Kontrollendgerät (3), mindestens eines individuellen jüngst erfassten biometrischen Datenelements, wobei das jüngst erfasste biometrische Datenelement jüngst mittels eines der zu kontrollierenden Einzelperson gehörenden Benutzerendgeräts (1) erfasst wurde;
Extrahieren (1152) von mit jedem jüngst erfassten biometrischen Datenelement assoziierten Metadaten, wobei die extrahierten assoziierten Metadaten Folgendes umfassen:
- Identifikationsinformationen des Benutzerendgeräts, das der zu kontrollierenden Einzelperson gehört und das die jüngst erfassten biometrischen Daten erhalten hat, und/oder
- Identifikationsinformationen des Fahrzeugs, in dem die Einzelperson oder die Gruppe von Einzelpersonen fährt;
Durchführen einer Antibetrugsverifikation (1153) einschließlich des Verifizierens der Kohärenz der extrahierten assoziierten Metadaten, um zu evaluieren, ob das jüngst erfasste biometrische Datenelement akzeptabel ist, wobei die Antibetrugsverifikation (1153) die Verifikation (11532) der Kohärenz der extrahierten assoziierten Metadaten mit den ersten Identifikationsinformationen des der zu kontrollierenden Einzelperson gehörenden Benutzerendgeräts und/oder des Fahrzeugs, in dem die Einzelperson oder die Gruppe von Einzelpersonen fährt, umfasst;
wobei die Antibetrugsverifikation ferner Folgendes umfasst: Vergleichen (1154) jedes abgerufenen jüngst erfassten biometrischen Datenelements mit einem Satz von biometrischen Referenzdaten, der in einem Kontrollserver (2) gespeichert ist, wobei die biometrischen Referenzdaten einer Liste von Einzelpersonen von Interesse entsprechen, um zu ermitteln, ob eine kontrollierte Einzelperson zu der Liste von Einzelpersonen von Interesse gehört;
als Funktion der "Antibetrugs"-Verifikation und des Vergleichs, Treffen (1155) einer ersten Entscheidung, die darin besteht:
- die Kontrolle in einem Bereich des Kontrollpunkts der Einzelperson oder der Gruppe von Einzelpersonen zu verstärken; oder andernfalls
- der Einzelperson oder der Gruppe von Einzelpersonen das Passieren zu gewähren; und
wenn die Einzelperson oder die Gruppe von Einzelpersonen an den Kontrollpunkt vorstellig wird:
Finalisieren (200) des Kontrollprotokolls jeder Einzelperson, umfassend Verifizieren (210) der Integrität der jüngst erfassten biometrischen Daten und/oder der Kohärenz der extrahierten assoziierten Metadaten in mindestens gleicher Weise wie in der Antibetrugsverifikation offengelegt; und
wenn die Authentifizierung und/oder die Verifikation der extrahierten assoziierten Metadaten einer Einzelperson oder einer Gruppe von Einzelpersonen fehlschlägt, Durchführen einer intensiveren Überprüfung der Einzelperson oder der Gruppe von Einzelpersonen, und
wenn sowohl die Authentifizierung als auch die Verifikation der extrahierten assoziierten Metadaten einer Einzelperson oder einer Gruppe von Einzelpersonen erfolgreich ist, Autorisieren der Einzelperson oder der Gruppe von Einzelperson zur Durchquerung des Kontrollpunkts.

2. Kontrollverfahren nach Anspruch 1, wobei die Initialisierung (115) einen Antibetrugsverifikationsschritt (1153) jedes jüngst erfassten biometrischen Datenelements umfasst, umfassend Verifizieren (11531), dass alle jüngst erfassten biometrischen Daten von unterschiedlichen Einzelpersonen stammen.

3. Kontrollverfahren nach Anspruch 1, wobei sich die zu kontrollierenden Einzelpersonen in demselben Fahrzeug befinden.

4. Kontrollverfahren nach Anspruch 1, wobei der Initialisierungsschritt des Kontrollprotokolls zu einer vorbestimmten Zeit und/oder an einem vorbestimmten Ort durchgeführt wird, bevor die Einzelperson oder die Gruppe von Einzelpersonen an dem Kontrollpunkt vorstellig wird.

5. Kontrollverfahren nach Anspruch 1, wobei das Benutzerendgerät jedes jüngst erfasste biometrische Datenelement sicher erfasst.

6. Kontrollverfahren nach Anspruch 1, wobei die Verifikation (210) der Integrität von Daten umfasst, zu verifizieren, dass die Anzahl jüngst erfasster biometrischer Daten der Anzahl an dem Kontrollpunkt vorstellig werdender Einzelpersonen entspricht, umfasst.

7. Kontrollverfahren nach Anspruch 1, wobei die Verifikation (210) der Integrität von Daten die Verifikation der Kohärenz von mindestens zwei der drei folgenden Arten von Metadaten umfasst:
- zeitliche Zeitstempelmetadaten des Erhaltens der jüngst erfassten biometrischen Daten und/oder Ortsmetadaten des Erhaltens der jüngst erfassten biometrischen Daten;
- Identifikationsmetadaten des Benutzerendgeräts, das die jüngst erfassten biometrischen Daten erhalten hat;
- Identifikationsmetadaten des Fahrzeugs, in dem sich die zu kontrollierenden Einzelperson befinden.

8. Kontrollendgerät (3) einer Kontrollbehörde, das einen Prozessor umfasst, ausgelegt zum Ausführen eines Verfahrens nach Anspruch 1.

9. Computerlesbares Speichermedium, das einen Computerprogrammcode speichert, der bei Ausführung durch mindestens einen Prozessor Folgendes durchführt:
bevor die Einzelperson oder die Gruppe von Einzelpersonen an dem Kontrollpunkt vorstellig werden:
Empfangen und Speichern, durch ein Kontrollendgerät der Kontrollbehörde, mindestens eines biometrischen Referenzdatenelements von der Einzelperson oder der Gruppe von Einzelpersonen und mindestens einer ersten Identifikationsinformation eines einer zu kontrollierenden Einzelperson gehörenden Benutzerendgeräts und/oder eines Fahrzeugs, in dem die Einzelperson oder die Gruppe von Einzelpersonen fährt;
Initialisieren eines Kontrollprotokolls jeder Einzelperson, wobei die Initialisierung Folgendes umfasst:
Abrufen, durch das Kontrollendgerät (3), mindestens eines individuellen jüngst erfassten biometrischen Datenelements, wobei das jüngst erfasste biometrische Datenelement jüngst mittels eines der zu kontrollierenden Einzelperson gehörenden Benutzerendgeräts (1) erfasst wurde;
Extrahieren von mit jedem jüngst erfassten biometrischen Datenelement assoziierten Metadaten, wobei die extrahierten assoziierten Metadaten Folgendes umfassen:
- Identifikationsinformationen des Benutzerendgeräts, das der zu kontrollierenden Einzelperson gehört und das die jüngst erfassten biometrischen Daten erhalten hat, und/oder
- Identifikationsinformationen des Fahrzeugs, in dem die Einzelperson oder die Gruppe von Einzelpersonen fährt;
Durchführen einer Antibetrugsverifikation einschließlich des Verifizierens der Kohärenz der extrahierten assoziierten Metadaten, um zu evaluieren, ob das jüngst erfasste biometrische Datenelement akzeptabel ist, wobei die Antibetrugsverifikation (1153) die Verifikation (11532) der Kohärenz der extrahierten assoziierten Metadaten mit den ersten Identifikationsinformationen des der zu kontrollierenden Einzelperson gehörenden Benutzerendgeräts und/oder des Fahrzeugs, in dem die Einzelperson oder die Gruppe von Einzelpersonen fährt, umfasst;
wobei die Antibetrugsverifikation ferner Folgendes umfasst: Vergleichen jedes abgerufenen jüngst erfassten biometrischen Datenelements mit einem Satz von biometrischen Referenzdaten, der in einem Kontrollserver (2) gespeichert ist, wobei die biometrischen Referenzdaten einer Liste von Einzelpersonen von Interesse entsprechen, um zu ermitteln, ob eine kontrollierte Einzelperson zu der Liste von Einzelpersonen von Interesse gehört;
als Funktion der "Antibetrugs"-Verifikation und des Vergleichs, Treffen (1155) einer ersten Entscheidung, die darin besteht:
- die Kontrolle in einem Bereich des Kontrollpunkts der Einzelperson oder der Gruppe von Einzelpersonen zu verstärken; oder andernfalls
- der Einzelperson oder der Gruppe von Einzelpersonen das Passieren zu gewähren; und
wenn die Einzelperson oder die Gruppe von Einzelpersonen an den Kontrollpunkt vorstellig wird:
Finalisieren des Kontrollprotokolls jeder Einzelperson, umfassend Verifizieren (210) der Integrität der jüngst erfassten biometrischen Daten und/oder der Kohärenz der extrahierten assoziierten Metadaten in mindestens gleicher Weise wie in der Antibetrugsverifikation offengelegt; und
wenn die Authentifizierung und/oder die Verifikation der extrahierten assoziierten Metadaten einer Einzelperson oder einer Gruppe von Einzelpersonen fehlschlägt, Durchführen einer intensiveren Überprüfung der Einzelperson oder der Gruppe von Einzelpersonen, und
wenn sowohl die Authentifizierung als auch die Verifikation der extrahierten assoziierten Metadaten einer Einzelperson oder einer Gruppe von Einzelpersonen erfolgreich ist, Autorisieren der Einzelperson oder der Gruppe von Einzelperson zur Durchquerung des Kontrollpunkts.

10. Kontrollsystem, das Folgendes umfasst:
mindestens ein Benutzerendgerät (1), das einer zu kontrollierenden Einzelperson gehört;
einen Kontrollserver (2); und
ein Kontrollendgerät einer Kontrollbehörde, ausgelegt zum Ausführen eines Verfahrens, das Folgendes umfasst:
bevor die Einzelperson oder die Gruppe von Einzelpersonen an dem Kontrollpunkt vorstellig werden:
Empfangen und Speichern, durch das Kontrollendgerät, mindestens eines biometrischen Referenzdatenelements von der Einzelperson oder der Gruppe von Einzelpersonen und mindestens einer ersten Identifikationsinformation des der zu kontrollierenden Einzelperson gehörenden Benutzerendgeräts und/oder eines Fahrzeugs, in dem die Einzelperson oder die Gruppe von Einzelpersonen fährt;
Initialisieren eines Kontrollprotokolls jeder Einzelperson, wobei die Initialisierung Folgendes umfasst:
Abrufen, durch das Kontrollendgerät (3), mindestens eines individuellen jüngst erfassten biometrischen Datenelements, wobei das jüngst erfasste biometrische Datenelement jüngst mittels des der zu kontrollierenden Einzelperson gehörenden Benutzerendgeräts (1) erfasst wurde;
Extrahieren von mit jedem jüngst erfassten biometrischen Datenelement assoziierten Metadaten, wobei die extrahierten assoziierten Metadaten Folgendes umfassen:
- Identifikationsinformationen des Benutzerendgeräts, das der zu kontrollierenden Einzelperson gehört und das die jüngst erfassten biometrischen Daten erhalten hat, und/oder
- Identifikationsinformationen des Fahrzeugs, in dem die Einzelperson oder die Gruppe von Einzelpersonen fährt;
Durchführen einer Antibetrugsverifikation einschließlich des Verifizierens der Kohärenz der extrahierten assoziierten Metadaten, um zu evaluieren, ob das jüngst erfasste biometrische Datenelement akzeptabel ist, wobei die Antibetrugsverifikation (1153) die Verifikation (11532) der Kohärenz der extrahierten assoziierten Metadaten mit den ersten Identifikationsinformationen des der zu kontrollierenden Einzelperson gehörenden Benutzerendgeräts und/oder des Fahrzeugs, in dem die Einzelperson oder die Gruppe von Einzelpersonen fährt, umfasst;
wobei die Antibetrugsverifikation ferner Folgendes umfasst: Vergleichen jedes abgerufenen jüngst erfassten biometrischen Datenelements mit einem Satz von biometrischen Referenzdaten, der in einem Kontrollserver (2) gespeichert ist, wobei die biometrischen Referenzdaten einer Liste von Einzelpersonen von Interesse entsprechen, um zu ermitteln, ob eine kontrollierte Einzelperson zu der Liste von Einzelpersonen von Interesse gehört;
als Funktion der "Antibetrugs"-Verifikation und des Vergleichs, Treffen (1155) einer ersten Entscheidung, die darin besteht:
- die Kontrolle in einem Bereich des Kontrollpunkts der Einzelperson oder der Gruppe von Einzelpersonen zu verstärken; oder andernfalls
- der Einzelperson oder der Gruppe von Einzelpersonen das Passieren zu gewähren; und
wenn die Einzelperson oder die Gruppe von Einzelpersonen an den Kontrollpunkt vorstellig wird:
Finalisieren des Kontrollprotokolls jeder Einzelperson, umfassend Verifizieren (210) der Integrität der jüngst erfassten biometrischen Daten und/oder der Kohärenz der extrahierten assoziierten Metadaten in mindestens gleicher Weise wie in der Antibetrugsverifikation offengelegt; und
wenn die Authentifizierung und/oder die Verifikation der extrahierten assoziierten Metadaten einer Einzelperson oder einer Gruppe von Einzelpersonen fehlschlägt, Durchführen einer intensiveren Überprüfung der Einzelperson oder der Gruppe von Einzelpersonen, und
wenn sowohl die Authentifizierung als auch die Verifikation der extrahierten assoziierten Metadaten einer Einzelperson oder einer Gruppe von Einzelpersonen erfolgreich ist, Autorisieren der Einzelperson oder der Gruppe von Einzelperson zur Durchquerung des Kontrollpunkts.

## Revendications

1. Procédé de contrôle d'un individu ou d'un groupe d'individus à un point de contrôle géré par une autorité de contrôle, le procédé comprenant les étapes suivantes réalisées par un processeur d'un terminal de contrôle d'une autorité de contrôle :
avant que l'individu ou le groupe d'individus ne se présente au point de contrôle,
la réception et le stockage, par le terminal de contrôle de l'autorité de contrôle, d'au moins une donnée biométrique de l'individu ou du groupe d'individus, et d'au moins une première information d'identification d'un terminal utilisateur appartenant à un individu à contrôler et/ou d'un véhicule dans lequel se trouve l'individu ou le groupe d'individus ;
l'initialisation (115) d'un protocole de contrôle de chaque individu, ladite initialisation comprenant :
la récupération (1151), par le terminal de contrôle (3), d'au moins une donnée biométrique fraîchement acquise individuelle, la donnée biométrique fraîchement acquise ayant été fraîchement acquise au moyen d'un terminal utilisateur (1) appartenant à l'individu à contrôler ;
l'extraction (1152) de métadonnées associées à chaque donnée biométrique fraîchement acquise, dans lequel les métadonnées associées extraites comprennent
- des informations d'identification du terminal utilisateur appartenant à l'individu à contrôler et ayant obtenu les données biométriques fraîchement acquises, et/ou
- des informations d'identification du véhicule dans lequel se trouve l'individu ou le groupe d'individus ;
la réalisation d'une vérification antifraude (1153) avec vérification de la cohérence des métadonnées associées extraites afin d'évaluer que les données biométriques fraîchement acquises sont acceptables ou non, dans lequel la vérification antifraude (1153) comprend la vérification (11532) de la cohérence des métadonnées associées extraites avec les premières informations d'identification du terminal utilisateur appartenant à l'individu à contrôler et/ou du véhicule dans lequel se trouve l'individu ou le groupe d'individus ;
la vérification antifraude comprenant en outre la comparaison (1154) de chaque donnée biométrique fraîchement acquise récupérée à un ensemble de données biométriques de référence stocké dans un serveur de contrôle (2), lesdites données biométriques de référence correspondant à une liste d'individus d'intérêt afin de déterminer qu'un individu contrôlé figure ou non sur la liste d'individus d'intérêt ;
en fonction de la vérification "antifraude" et de la comparaison, la prise (1155) d'une première décision qui est :
- d'approfondir le contrôle dans une région du point de contrôle de l'individu ou du groupe d'individus ; ou bien
- d'accorder le passage à l'individu ou au groupe d'individus ; et
lorsque l'individu ou le groupe d'individus se présente au point de contrôle :
la finalisation (200) du protocole de contrôle de chaque individu, avec vérification (210) de l'intégrité des données biométriques fraîchement acquises et/ou de la cohérence des métadonnées associées extraites au moins d'une manière identique à celle exposée dans la vérification antifraude ; et
si l'authentification et/ou la vérification des métadonnées associées extraites d'un individu ou d'un groupe d'individus échouent, la soumission de l'individu ou du groupe d'individus à un examen plus approfondi, et
si à la fois l'authentification et la vérification des métadonnées associées extraites d'un individu ou d'un groupe d'individus réussissent, l'autorisation de l'individu ou du groupe d'individus à franchir le point de contrôle.

2. Procédé de contrôle selon la revendication 1, dans lequel l'initialisation (115) comprend une étape de vérification antifraude (1153) de chaque donnée biométrique fraîchement acquise, comprenant la vérification (11531) que toutes les données biométriques fraîchement acquises proviennent d'individus différents.

3. Procédé de contrôle selon la revendication 1, dans lequel les individus à contrôler se trouvent dans le même véhicule.

4. Procédé de contrôle selon la revendication 1, dans lequel l'étape d'initialisation du protocole de contrôle est réalisée à un moment prédéterminé et/ou à un endroit prédéterminé avant que l'individu ou le groupe d'individus ne se présente au point de contrôle.

5. Procédé de contrôle selon la revendication 1, dans lequel le terminal utilisateur acquiert de manière sécurisée chaque donnée biométrique fraîchement acquise.

6. Procédé de contrôle selon la revendication 1, dans lequel la vérification (210) de l'intégrité des données comprend la vérification que le nombre de données biométriques fraîchement acquises correspond au nombre d'individus se présentant au point de contrôle.

7. Procédé de contrôle selon la revendication 1, dans lequel la vérification (210) de l'intégrité des données comprend la vérification de la cohérence d'au moins deux des trois types de métadonnées suivants :
- des métadonnées temporelles d'horodatage de l'obtention des données biométriques fraîchement acquises et/ou des métadonnées de lieu de l'obtention des données biométriques fraîchement acquises ;
- des métadonnées d'identification du terminal utilisateur ayant obtenu les données biométriques fraîchement acquises ;
- des métadonnées d'identification du véhicule contenant les individus à contrôler.

8. Terminal de contrôle (3) d'une autorité de contrôle comprenant un processeur configuré pour exécuter un procédé selon la revendication 1.

9. Support de stockage lisible par ordinateur stockant un code de programme informatique qui, à son exécution par au moins un processeur, réalise :
avant que l'individu ou le groupe d'individus ne se présente au point de contrôle :
la réception et le stockage, par un terminal de commande de l'autorité de contrôle, d'au moins une donnée biométrique de référence de l'individu ou du groupe d'individus, et d'au moins une première information d'identification d'un terminal utilisateur appartenant à un individu à contrôler et/ou d'un véhicule dans lequel se trouve l'individu ou le groupe d'individus ;
l'initialisation d'un protocole de contrôle de chaque individu, ladite initialisation comprenant :
la récupération, par le terminal de contrôle (3), d'au moins une donnée biométrique individuelle fraîchement acquise, la donnée biométrique fraîchement acquise ayant été fraîchement acquise au moyen d'un terminal utilisateur (1) appartenant à l'individu à contrôler ;
l'extraction de métadonnées associées à chaque donnée biométrique fraîchement acquise, dans lequel les métadonnées associées extraites comprennent :
- des informations d'identification du terminal utilisateur appartenant à l'individu à contrôler et ayant obtenu les données biométriques fraîchement acquises, et/ou
- des informations d'identification du véhicule dans lequel se trouve l'individu ou le groupe d'individus ;
la réalisation d'une vérification antifraude comportant la vérification de la cohérence des métadonnées associées extraites afin d'évaluer que les données biométriques fraîchement acquises sont acceptables ou non, dans lequel la vérification antifraude (1153) comprend la vérification (11532) de la cohérence des métadonnées associées extraites avec les premières informations d'identification du terminal utilisateur appartenant à l'individu à contrôler et/ou du véhicule dans lequel se trouve l'individu ou le groupe d'individus ;
la vérification antifraude comprenant en outre la comparaison de chaque donnée biométrique fraîchement acquise récupérée à un ensemble de données biométriques de référence stocké dans un serveur de contrôle (2), lesdites données biométriques de référence correspondant à une liste d'individus d'intérêt afin de déterminer qu'un individu contrôlé figure ou non sur la liste d'individus d'intérêt ;
en fonction de la vérification "antifraude" et de la comparaison, la prise (1155) d'une première décision qui est :
- d'approfondir le contrôle dans une région du point de contrôle de l'individu ou du groupe d'individus ; ou bien
- d'accorder le passage à l'individu ou au groupe d'individus ; et
lorsque l'individu ou le groupe d'individus se présente au point de contrôle :
la finalisation du protocole de contrôle de chaque individu, comprenant la vérification (210) de l'intégrité des données biométriques fraîchement acquises et/ou de la cohérence des métadonnées associées extraites au moins d'une manière identique à celle exposée dans la vérification antifraude ; et
si l'authentification et/ou la vérification des métadonnées associées extraites d'un individu ou d'un groupe d'individus échouent, la soumission de l'individu ou du groupe d'individus à un examen plus approfondi, et
si à la fois l'authentification et la vérification des métadonnées associées extraites d'un individu ou d'un groupe d'individus réussissent, l'autorisation de l'individu ou du groupe d'individus à franchir le point de contrôle.

10. Système de contrôle comprenant :
au moins un terminal utilisateur (1) appartenant à un individu à contrôler ;
un serveur de contrôle (2) ; et
un terminal de contrôle d'une autorité de contrôle configuré pour exécuter un procédé comprenant :
avant que l'individu ou groupe d'individus ne se présente au point de contrôle :
la réception et le stockage, par le terminal de commande, d'au moins une donnée biométrique de référence de l'individu ou du groupe d'individus, et d'au moins une première information d'identification d'un terminal utilisateur appartenant à un individu à contrôler et/ou d'un véhicule dans lequel se trouve l'individu ou le groupe d'individus ;
l'initialisation d'un protocole de contrôle de chaque individu, ladite initialisation comprenant :
la récupération, par le terminal de contrôle (3), d'au moins une donnée biométrique individuelle fraîchement acquise, la donnée biométrique fraîchement acquise ayant été fraîchement acquise au moyen du terminal utilisateur (1) appartenant à l'individu à contrôler ;
l'extraction de métadonnées associées à chaque donnée biométrique fraîchement acquise, dans lequel les métadonnées associées extraites comprennent :
- des informations d'identification du terminal utilisateur appartenant à l'individu à contrôler et ayant obtenu les données biométriques fraîchement acquises, et/ou
- des informations d'identification du véhicule dans lequel se trouve l'individu ou le groupe d'individus ;
la réalisation d'une vérification antifraude comportant la vérification de la cohérence des métadonnées associées extraites afin d'évaluer que les données biométriques fraîchement acquises sont acceptables ou non, dans lequel la vérification antifraude (1153) comprend la vérification (11532) de la cohérence des métadonnées associées extraites avec les premières informations d'identification du terminal utilisateur appartenant à l'individu à contrôler et/ou du véhicule dans lequel se trouve l'individu ou le groupe d'individus ;
la vérification antifraude comprenant en outre la comparaison de chaque donnée biométrique fraîchement acquise récupérée à un ensemble de données biométriques de référence stocké dans un serveur de contrôle (2), lesdites données biométriques de référence correspondant à une liste d'individus d'intérêt afin de déterminer qu'un individu contrôlé figure ou non sur la liste d'individus d'intérêt ;
en fonction de la vérification "antifraude" et de la comparaison, la prise (1155) d'une première décision qui est :
- d'approfondir le contrôle dans une région du point de contrôle de l'individu ou du groupe d'individus ; ou bien
- d'accorder le passage à l'individu ou au groupe d'individus ; et
lorsque l'individu ou le groupe d'individus se présente au point de contrôle :
la finalisation du protocole de contrôle de chaque individu, comprenant la vérification (210) de l'intégrité des données biométriques fraîchement acquises et/ou de la cohérence des métadonnées associées extraites au moins d'une manière identique à celle exposée dans la vérification antifraude ; et
si l'authentification et/ou la vérification des métadonnées associées extraites d'un individu ou d'un groupe d'individus échouent, la soumission de l'individu ou du groupe d'individus à un examen plus approfondi, et
si à la fois l'authentification et la vérification des métadonnées associées extraites d'un individu ou d'un groupe d'individus réussissent, l'autorisation de l'individu ou du groupe d'individus à franchir le point de contrôle.
